# DEMANDE DE BREVET EUROPEEN

(11) **EP 1 541 832 A1**
(43) Date de publication de la demande: **15.06.2005**
(21) Numéro de dépôt: 04300819.2
(22) Date de dépôt: 29.11.2004
(51) Int. Cl.: F02C 6/12, F01D 13/00

(54) **Turbocompresseur comportant deux roues de turbine**

(30) Priorité: 28.11.2003 FR 0313979
(71) Demandeur: Renault s.a.s., 92100 Boulogne Billancourt (FR)
(72) Inventeur: RIVERE, Jean-Pierre, 75016, PARIS (FR)

(57) **Abrégé**

L'invention concerne une turbine (10) de turbocompresseur comportant un carter (14) qui délimite une chambre (16) cylindrique circulaire d'axe longitudinal (A) dans laquelle une première roue (40) est montée à rotation autour de l'axe longitudinal (A), et dont la paroi interne (42) comporte un premier orifice d'entrée (26) et un premier orifice de sortie (30), la paroi interne (48) de la chambre (16) comportant un second orifice d'entrée (28) dont la section de passage est commandée, caractérisée en ce que la chambre (16) comporte une cloison transversale (34) qui délimite de façon étanche :
- un premier compartiment (36) qui loge la première roue (40), et dont la paroi interne (42) comporte le premier orifice d'entrée (26) et le premier orifice de sortie (30) ;
- et un second compartiment (38) qui loge une seconde roue (46) montée à rotation autour de l'axe longitudinal (A), et dont la paroi interne (48) comporte le second orifice d'entrée (28) et un second orifice de sortie (32).

## Description

L'invention concerne une turbine de turbocompresseur, notamment pour un véhicule automobile.

L'invention concerne plus particulièrement une turbine de turbocompresseur, notamment pour un véhicule automobile, comportant un carter de turbine qui délimite une chambre sensiblement cylindrique circulaire d'axe longitudinal dans laquelle une première roue de turbine est montée à rotation autour de l'axe longitudinal, et dont la paroi interne comporte un premier orifice d'entrée des gaz et un premier orifice de sortie des gaz, et du type dans lequel la paroi interne de la chambre comporte un second orifice d'entrée des gaz dont la section de passage est commandée en fonction de paramètres de fonctionnement du moteur.

Il est fréquent que les moteurs à combustion interne soient suralimentés par un turbocompresseur. Le turbocompresseur permet notamment d'augmenter leur rendement et leurs performances.

Le turbocompresseur comporte principalement une turbine et un compresseur qui sont reliés entre eux par un arbre commun. La turbine comporte une roue de turbine qui est liée en rotation à l'arbre commun, et qui est entraînée en rotation par les gaz d'échappement du moteur. La roue de turbine entraîne ainsi en rotation une roue de compresseur, par l'intermédiaire de l'arbre commun. La turbine permet donc de convertir l'énergie d'écoulement des gaz d'échappement en énergie mécanique. La roue de compresseur aspire ainsi de l'air frais et envoie l'air pré-comprimé vers les cylindres du moteur.

Le débit de gaz d'échappement qui traverse la turbine est proportionnel au régime du moteur. En général, la turbine n'est efficace que dans une plage restreinte de régimes de fonctionnement du moteur. Selon sa conception, la turbine est généralement soit efficace à hauts régimes, soit efficace à bas régimes, au détriment des autres régimes.

La plage de régimes dans laquelle la turbine est efficace dépend notamment de la forme de la roue de turbine, et de la façon dont les gaz sont guidés jusqu'à celle-ci.

Afin de résoudre ce problème, et d'étendre la plage de régimes dans laquelle la turbine est efficace, il est connu de réaliser des turbines dites "à géométrie variable". Ce type de turbine comporte des moyens pour faire varier la section de passage des gaz d'échappement en amont de la roue de turbine. Ainsi, il est possible de réguler la vitesse avec laquelle les gaz atteignent la roue de turbine, et donc la pression qu'ils exercent sur les aubes de la roue de turbine. La plage de régimes dans laquelle la turbine est efficace, ou plage d'efficacité, est donc sensiblement élargie.

Cependant, la forme de la roue de turbine limite encore l'étendue de la plage d'efficacité. La turbine demeure donc inefficace pour une grande proportion des régimes du moteur.

Afin de résoudre ce problème, et d'étendre encore la plage de régimes du moteur sur laquelle la turbine est efficace, l'invention propose une turbine du type décrit précédemment, caractérisée en ce que la chambre comporte une cloison transversale perpendiculaire à l'axe longitudinal qui délimite de façon étanche :
- un premier compartiment qui loge la première roue de turbine, et dont la paroi interne comporte le premier orifice d'entrée et le premier orifice de sortie ;
- et un second compartiment qui loge une seconde roue de turbine montée à rotation autour de l'axe longitudinal, et dont la paroi interne comporte le second orifice d'entrée et un second orifice de sortie des gaz.

Selon d'autres caractéristiques de l'invention :
- la première roue de turbine et la seconde roue de turbine sont liées en rotation à un même arbre d'axe longitudinal qui traverse la cloison transversale ;
- la première roue de turbine comporte des aubes dont la génératrice est une droite sensiblement parallèle à l'axe longitudinal, et en ce que le premier orifice de sortie est situé dans une paroi périphérique interne du premier compartiment ;
- la seconde roue de turbine comporte un moyeu conique dont la base est proximale de la cloison transversale, et dont le sommet est distal de la cloison transversale, de façon à orienter un flux d'entrée tangentiel de gaz en un flux de sortie axial, et elle comporte des aubes radiales qui s'étendent depuis le moyeu conique sensiblement jusqu'à la paroi périphérique interne du second compartiment ; et le second orifice d'entrée est situé dans la paroi périphérique interne du second compartiment au droit de la base proximale du moyeu conique, et le second orifice de sortie est situé dans une paroi transversale opposée à la cloison transversale, proche du sommet distal du moyeu conique ;
- le second orifice d'entrée constitue l'extrémité aval d'une volute d'alimentation en gaz ;
- la section de passage du second orifice d'entrée est commandée par l'intermédiaire d'un tiroir tubulaire de régulation ;
- les premier et second orifices d'entrée sont raccordés à un conduit commun d'alimentation en gaz de la turbine ;
- les premier et second orifices de sortie sont raccordés à un conduit commun d'évacuation des gaz de la turbine.

D'autres caractéristiques et avantages de l'invention apparaîtront au cours de la lecture détaillée qui va suivre, pour la compréhension de laquelle on se reportera aux dessins annexés parmi lesquels :
- la figure 1 est une vue en section axiale verticale, selon le plan 1-1 de la figure 3, qui représente une turbine réalisée conformément aux enseignements de l'invention, comportant un premier compartiment qui loge une première roue de turbine, et un second compartiment qui loge une seconde roue de turbine, et dont l'alimentation en gaz d'échappement est régulée ;
- la figure 2 est une vue en section transversale, selon le plan 2-2 de la figure 1, qui représente le second compartiment dans lequel les gaz ne sont pas admis ;
- la figure 3 est une vue en section transversale, selon le plan 3-3 de la figure 1, qui représente le premier compartiment ;
- la figure 4 est une vue analogue à celle de la figure 1 , dans laquelle les gaz d'échappement sont admis dans le second compartiment de la turbine ;
- la figure 5 est une vue en section transversale, selon le plan 5-5 de la figure 4, qui représente le second compartiment dans lequel les gaz sont admis.

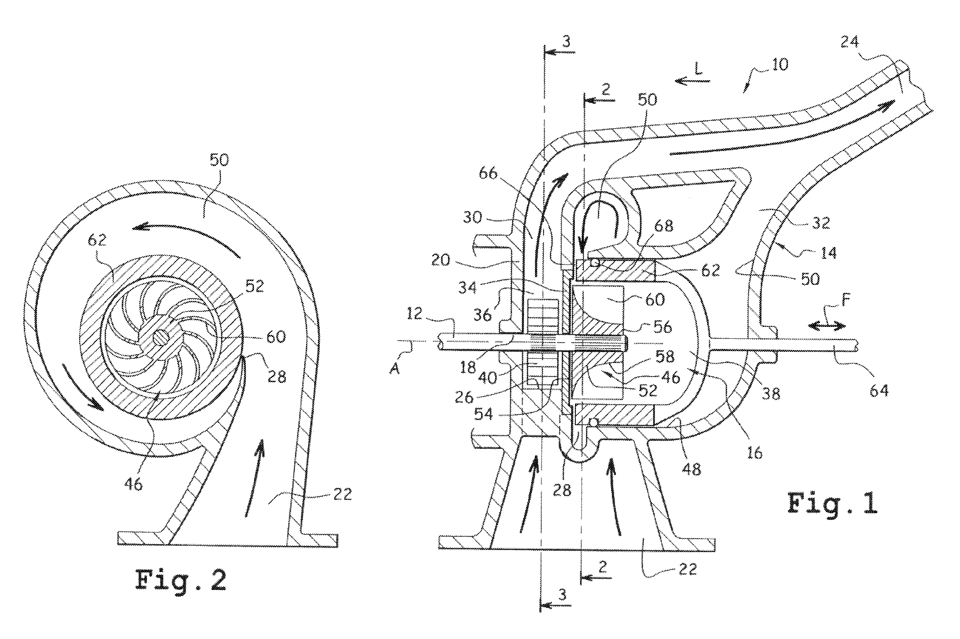

Par convention, on adoptera dans la suite de la description une direction longitudinale indiquée par la flèche L de la figure 1. Le sens d'écoulement d'amont en aval des gaz d'échappement est indiqué par les flèches des figures.

De façon classique, un turbocompresseur comporte principalement un compresseur (non représenté) et une turbine 10 qui sont liés mécaniquement en rotation par un arbre commun 12. On a représenté à la figure 1, la turbine 10 d'un tel turbocompresseur.

L'arbre de turbine 12 est ici d'orientation longitudinale. Le compresseur est situé à gauche de la turbine 10 selon l'orientation de la figure 1.

La turbine 10 comporte un carter 14 qui délimite une chambre 16 globalement cylindrique circulaire d'axe longitudinal A. L'arbre de turbine 12 est monté à rotation autour de l'axe longitudinal A. L'arbre de turbine 12 se prolonge jusque dans la chambre cylindrique circulaire 16 par l'intermédiaire d'un orifice 18 formé dans la paroi transversale gauche 20 du carter 14.

Le carter 14 comporte un conduit inférieur 22 d'alimentation en gaz de la turbine 10, qui est ici destiné à être raccordé à un collecteur d'échappement (non représenté) d'un moteur à combustion interne, notamment de véhicule automobile. Le conduit d'alimentation 22 débouche dans la chambre circulaire cylindrique par l'intermédiaire d'un premier orifice d'entrée 26 et d'un second orifice d'entrée 28.

Le carter 14 comporte aussi un conduit supérieur 24 d'évacuation des gaz de la turbine qui est ici destiné à être raccordé à un système d'échappement (non représenté) du véhicule automobile. Les gaz sont évacués de la chambre cylindrique par l'intermédiaire d'un premier orifice de sortie 30 et d'un second orifice de sortie 32 qui débouchent dans le conduit d'évacuation des gaz.

Conformément aux enseignements de l'invention, la chambre cylindrique circulaire 16 comporte une cloison transversale 34 perpendiculaire à l'axe longitudinal A qui délimite, de façon étanche, un premier compartiment 36 qui est situé à gauche selon la figure 1, et un second compartiment 38 qui est situé à droite selon la figure 1. L'arbre de turbine 12 s'étend axialement jusque dans le deuxième compartiment 38, en passant à travers la cloison étanche 34.

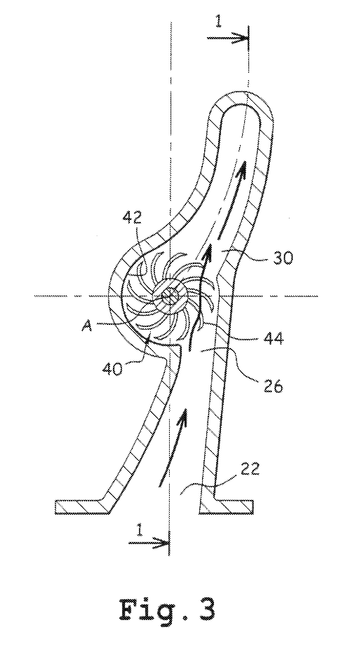

Le premier compartiment 36 loge une première roue de turbine 40 qui est représentée plus en détail à la figure 3. La paroi périphérique interne 42 du premier compartiment 36 comporte le premier orifice 26 d'entrée des gaz et le premier orifice 30 de sortie des gaz.

Le premier orifice d'entrée 26 est orienté de façon que le flux d'entrée des gaz soit sensiblement tangent à la première roue de turbine 40.

Le premier orifice d'entrée 26 est situé sensiblement en regard du premier orifice de sortie 30 de façon que le flux de gaz d'échappement ne subisse globalement pas de changement de direction entre le premier orifice d'entrée 26 et le second orifice de sortie 30.

La première roue de turbine 40 est liée en rotation à l'arbre de turbine 12. La première roue de turbine 40 est dite "de Pelton", c'est-à-dire qu'elle comporte des aubes 44 dont la génératrice est une droite sensiblement parallèle à l'axe longitudinal A.

Les aubes 44 sont légèrement incurvées dans un même sens de façon que, lorsque la première roue de turbine 40 tourne dans un sens anti-horaire selon la figure 3, la surface convexe des aubes 44 soit dirigée vers l'avant. Ainsi, les gaz d'échappement qui entrent par le premier orifice d'entrée 26, exercent une pression de poussée sur la surface concave des aubes 44.

Le second compartiment 38 de droite loge une seconde roue de turbine 46. La seconde roue de turbine 46 est liée en rotation à l'arbre de turbine 12 autour de l'axe longitudinal A. La paroi périphérique interne 48 du second compartiment 38 comporte le second orifice d'entrée des gaz 28.

Les gaz d'échappement sont acheminés depuis le conduit d'alimentation 22 jusqu'au second orifice d'entrée 28 par l'intermédiaire d'une volute 50 qui s'enroule autour du second compartiment 38 dans un sens anti-horaire selon la figure 2. La paroi interne transversale d'extrémité gauche 52 du second compartiment 38 comporte un second orifice de sortie 32.

Le flux de gaz d'échappement entrant dans le second compartiment 38 par l'intermédiaire de la volute 50 et du second orifice d'entrée 28 est sensiblement tangent à la section circulaire du second compartiment 38.

La seconde roue de turbine 46 comporte un moyeu conique 52 qui est visible à la figure 1. La base transversale 54 du moyeu conique 52 est proximale de la cloison transversale 34. Le sommet 56 distal du moyeu conique 52 est ici tronqué de façon que son diamètre soit sensiblement égal au diamètre de l'arbre de turbine 12. La surface de périphérie 58 du cône 52 est légèrement concave de façon à orienter le flux tangentiel d'entrée des gaz en un flux de sortie sensiblement axial longitudinal.

La roue de turbine 46 comporte aussi des aubes radiales 60 qui s'étendent depuis le moyeu, sensiblement jusqu'à la paroi périphérique interne 48 du second compartiment 38.

La turbine 10 comporte donc deux circuits de circulation des gaz d'échappement qui passent respectivement par le premier compartiment 36 ou par le second compartiment 38 avant de ressortir du carter par le conduit commun d'évacuation 24.

Le second compartiment 38 comporte des moyens pour commander la section de passage du second orifice d'entrée 28. Ces moyens de commande sont principalement constitués par un tiroir tubulaire 62, et par une fourchette de commande 64 qui est reliée à une unité de commande, mécanique et/ou électronique, (non représentée).

Le tiroir tubulaire 62 a une section transversale externe sensiblement complémentaire de la section transversale interne du second compartiment 38. Le tiroir tubulaire 62 est monté coulissant dans le second compartiment 38 entre la paroi périphérique interne 48 du second compartiment 38 et l'extrémité libre des aubes 60, entre une position de fermeture du second orifice d'entrée 28 dans laquelle l'extrémité gauche 66 du tiroir tubulaire 62 est en contact étanche avec la cloison transversale 34, et une position extrême d'ouverture de la section de passage du second orifice 28 dans laquelle la section de passage de l'orifice 28 est entièrement dégagée.

De façon que la fermeture soit étanche, la paroi externe du tiroir tubulaire 62 comporte des moyens d'étanchéité 68 qui empêchent les gaz d'échappement de circuler depuis le second orifice d'entrée 28 jusqu'au second orifice de sortie 32, en passant entre le tiroir tubulaire 62 et la paroi périphérique interne 48.

La fourchette 64 comporte ici une tige 70 dont une première extrémité fourchue 72 comprend des branches 74 qui sont fixées par leur terminaison à l'extrémité droite 76 du tiroir tubulaire 62. La tige 70 est montée coulissante longitudinalement par rapport au carter 14, et la seconde extrémité (non représentée) de la tige 70 est reliée à une unité de commande électronique et/ou mécanique.

Ainsi, le coulissement du tiroir tubulaire 62 est commandé par l'intermédiaire de la fourchette 64. L'unité de commande pilote le coulissement longitudinal de la fourchette 64 selon la flèche F, notamment en fonction de la pression des gaz d'échappement en amont des orifices d'entrée 26 et 28, du régime de fonctionnement du moteur, et de la pression d'air à la sortie du compresseur.

Nous allons à présent décrire le fonctionnement d'une telle turbine 10.

Lorsque le tiroir tubulaire 62 est en position de fermeture, comme représenté à la figure 1, la circulation des gaz d'échappement dans le second compartiment 38 est interrompue, comme représenté à la figure 2.

Ainsi, les gaz d'échappement admis par le conduit 22, entrent dans le premier compartiment 36 par l'intermédiaire du premier orifice d'entrée 26. Les gaz d'échappement entraînent ainsi en rotation la première roue de turbine 40 qui entraîne l'arbre de turbine 12 en rotation selon un sens anti-horaire en regardant la figure 3.

Les gaz d'échappement sont ensuite évacués par le premier orifice de sortie 30, puis par le conduit commun d'évacuation 24, en direction du dispositif d'échappement du véhicule.

Ce mode de fonctionnement de la turbine 10 est notamment avantageux lorsque la pression d'entrée des gaz d'échappement est faible. La première roue de turbine 40 est en effet conçue de façon que la conversion de l'énergie contenue dans les gaz d'échappement en énergie mécanique soit optimale pour une faible pression de gaz d'échappement.

L'unité de commande pilote donc le tiroir tubulaire 62 en position de fermeture pour de bas régimes de fonctionnement du moteur et/ou pour une faible pression des gaz d'échappement en amont des orifices d'entrée 26 et 28, par exemple dans le conduit commun d'alimentation 22.

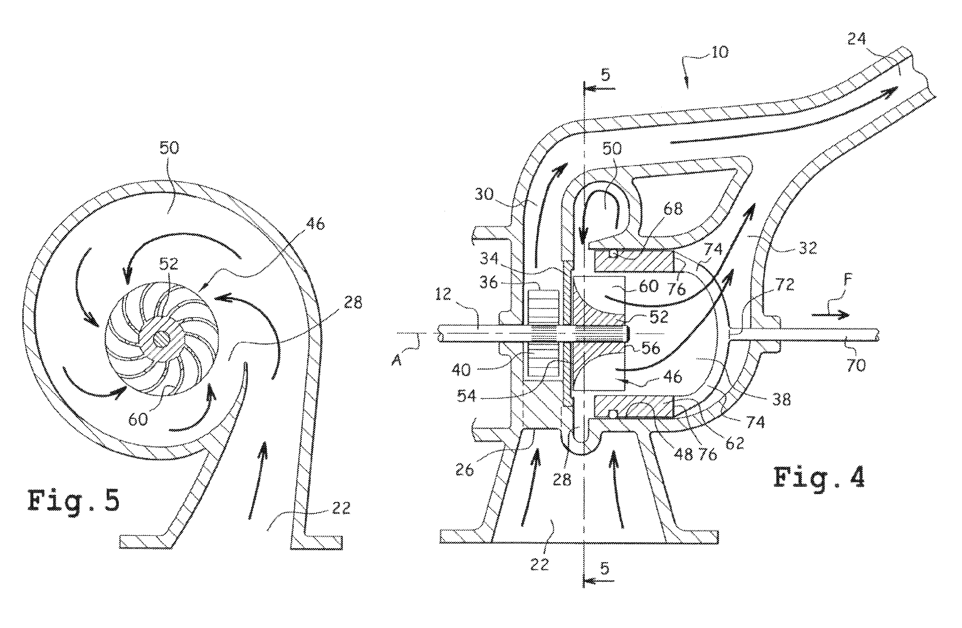

On a représenté aux figures 4 et 5 la turbine 10 dans un second mode de fonctionnement dans lequel le tiroir tubulaire est en position ouverte.

Dans ce mode de fonctionnement, les gaz d'échappement admis par le conduit 22 sont répartis d'une part vers le premier compartiment étanche 36 par l'intermédiaire du premier orifice d'entrée 26 et, d'autre part, vers le second compartiment 38 par l'intermédiaire de la volute 50, puis du second orifice d'entrée 28.

Le fonctionnement de la première roue de turbine 40 reste conforme à ce qui a été décrit précédemment.

La seconde partie des gaz d'échappement est orientée par l'intermédiaire de la volute 50 jusqu'au second orifice d'entrée des gaz 28. Comme représenté à la figure 5, les gaz d'échappement entraînent alors en rotation la seconde roue de turbine 46 qui est liée en rotation l'arbre de turbine 12.

Le moyeu conique 52 de la seconde roue de turbine 46 oriente le flux tangentiel d'entrée des gaz d'échappement en un flux axial de sortie qui dirige les gaz vers le second orifice de sortie 32.

Ce mode de fonctionnement de la turbine est notamment efficace lorsque la pression des gaz d'échappement est élevée. En effet, la seconde roue de turbine 46 est adaptée à des pressions de gaz très élevées.

L'unité de commande pilote donc le tiroir tubulaire 62 en position d'ouverture pour des régimes élevés de fonctionnement du moteur et/ou pour une forte pression des gaz d'échappement en amont des orifices d'entrée 26 et 28, par exemple dans le conduit commun d'alimentation 22.

L'unité de commande prend aussi en compte la pression de l'air à la sortie du compresseur. En effet, lorsque la pression de l'air est jugée suffisante, il n'est pas nécessaire d'augmenter l'efficacité de la turbine en agrandissant la section de passage du second orifice d'entrée 28. En revanche, si la pression de l'air est jugée insuffisante, l'unité de commande pilotera l'ouverture de l'orifice d'entrée 28 de façon à augmenter l'efficacité de la turbine.

Ainsi, dans toute la plage de régimes de fonctionnement du moteur, la turbine 10 atteint un premier niveau d'efficacité pour une pression faible des gaz d'échappement lorsque les gaz ne passent que par le premier compartiment 36 et donc par la première roue de turbine 40. Le compresseur est alors entraîné par cette seule première roue de turbine 40.

La turbine atteint aussi un second pic d'efficacité pour une haute pression des gaz d'échappement lorsqu'une partie des gaz circule par le second compartiment 38 et donc par la seconde roue de turbine 46.

Selon une variante non représentée de l'invention, la section de passage de l'orifice 28 est susceptible d'occuper des positions intermédiaires entre la position de fermeture et la position extrême d'ouverture. Il est ainsi possible d'étendre encore la plage sur laquelle l'efficacité de la seconde roue de turbine 46 est optimale.

## Revendications

1. Turbine (10) de turbocompresseur, notamment pour un véhicule automobile, comportant un carter de turbine (14) qui délimite une chambre (16) sensiblement cylindrique circulaire d'axe longitudinal (A) dans laquelle une première roue de turbine (40) est montée à rotation autour de l'axe longitudinal (A), et dont la paroi interne (42) comporte un premier orifice d'entrée (26) des gaz et un premier orifice de sortie (30) des gaz, et du type dans lequel la paroi interne (48) de la chambre (16) comporte un second orifice d'entrée (28) des gaz dont la section de passage est commandée en fonction de paramètres de fonctionnement du moteur,
**caractérisée en ce que** la chambre (16) comporte une cloison transversale (34) perpendiculaire à l'axe longitudinal (A) qui délimite de façon étanche :
- un premier compartiment (36) qui loge la première roue de turbine (40), et dont la paroi interne (42) comporte le premier orifice d'entrée (26) et le premier orifice de sortie (30) ;
- et un second compartiment (38) qui loge une seconde roue de turbine (46) montée à rotation autour de l'axe longitudinal (A), et dont la paroi interne (48) comporte le second orifice d'entrée (28) et un second orifice de sortie (32) des gaz.

2. Turbine (10) selon la revendication précédente, **caractérisée en ce que** la première roue de turbine (40) et la seconde roue de turbine (46) sont liées en rotation à un même arbre (12) d'axe longitudinal (A) qui traverse la cloison transversale (34).

3. Turbine (10) selon l'une quelconque des revendications précédentes, **caractérisée en ce que** la première roue de turbine (40) comporte des aubes (44) dont la génératrice est une droite sensiblement parallèle à l'axe longitudinal (A), et **en ce que** le premier orifice de sortie (30) est situé dans une paroi périphérique interne (42) du premier compartiment (36).

4. Turbine (10) selon l'une quelconque des revendications précédentes, **caractérisée en ce que** la seconde roue de turbine (46) comporte :
- un moyeu conique (52) dont la base (54) est proximale de la cloison transversale (34), et dont le sommet (56) est distal de la cloison transversale (34), de façon à orienter un flux d'entrée tangentiel de gaz en un flux de sortie axial ;
- et des aubes radiales (60) qui s'étendent depuis le moyeu conique (52) sensiblement jusqu'à la paroi périphérique interne (48) du second compartiment (38) ;
et **en ce que** le second orifice d'entrée (28) est situé dans la paroi périphérique interne (48) du second compartiment (38) au droit de la base proximale (54) du moyeu conique (52), et le second orifice de sortie (32) est situé dans une paroi transversale (50) opposée à la cloison transversale (34), proche du sommet distal (56) du moyeu conique (52).

5. Turbine (10) selon la revendication précédente, **caractérisée en ce que** le second orifice d'entrée (28) constitue l'extrémité aval d'une volute (50) d'alimentation en gaz.

6. Turbine (10) selon l'une quelconque des revendications précédentes, **caractérisée en ce que** la section de passage du second orifice d'entrée (28) est commandée par l'intermédiaire d'un tiroir tubulaire (62) de régulation.

7. Turbine (10) selon l'une quelconque des revendications précédentes, **caractérisée en ce que** les premier (26) et second (28) orifices d'entrée sont raccordés à un conduit commun d'alimentation (22) en gaz de la turbine (10).

8. Turbine (10) selon l'une quelconque des revendications précédentes, **caractérisée en ce que** les premier (30) et second (32) orifices de sortie sont raccordés à un conduit commun d'évacuation (24) des gaz de la turbine (10).
